Europäisches Patentamt

European Patent Office

Office européen des brevets

(19)

(11) Veröffentlichungsnummer: **0 189 446**
**B1**

(12) **EUROPÄISCHE PATENTSCHRIFT**

(45) Veröffentlichungstag der Patentschrift:
20.12.89

(51) Int. Cl.⁴: **F 24 H 9/20**, G 05 D 23/24

(21) Anmeldenummer: **85903277.3**

(22) Anmeldetag: **06.07.85**

(86) Internationale Anmeldenummer:
**PCT/EP 85/00329**

(87) Internationale Veröffentlichungsnummer:
**WO 86/00689 (30.01.86 Gazette 86/3)**

(54) **Elektronischer Leistungssteller für einen elektrischen Durchlauferhitzer mit regelbarer Auslauftemperatur.**

(30) Priorität: 14.07.84 DE 3426046
11.10.84 DE 3437242

(43) Veröffentlichungstag der Anmeldung:
06.08.86 Patentblatt 86/32

(45) Bekanntmachung des Hinweises auf die Patenterteilung:
20.12.89 Patentblatt 89/51

(84) Benannte Vertragsstaaten:
DE GB NL

(56) Entgegenhaltungen:
DE-A- 1 949 949
DE-A- 2 837 934
DE-B- 1 228 012
FR-A- 1 399 948

(73) Patentinhaber: Eckerfeld, Erika, Hüttenweg 19,
D-5628 Heiligenhaus (DE)

(72) Erfinder: Eckerfeld, Alfred, Hüttenweg 19,
D-5628 Heiligenhaus (DE)

(74) Vertreter: Weisse, Jürgen, Dipl.-Phys. et al,
Patentanwälte Dipl.-Phys. Jürgen Weisse Dipl.-Chem.
Dr. Rudolf Wolgast Bökenbusch 41 Postfach 11 03 86,
D-5620 Velbert 11 Langenberg (DE)

## Beschreibung

### Technisches Gebiet

Die Erfindung betrifft eine Vorrichtung zur Regelung der Auslauftemperatur bei elektrischen Durchlauferhitzern, bei denen der Strom in vom Wasser durchflossenen Heizkanälen angeordneten Heizwiderständen mittels eines im auf die Wassertemperatur ansprechenden Temperaturfühlers, eines von dem Temperaturfühler beaufschlagten Reglers und eines elektronischen Leistungsstellers regelbar ist, enthaltend:

(a) eine von netzfrequenter Wechselspannung beaufschlagte Gleichrichterbrücke, welche eine mit der doppelten Netzfrequenz pulsierende Gleichspannung liefert,

(b) einen Schmitt-Trigger, auf den die pulsierende Gleichspannung aufgeschaltet ist, zur Erzeugung einer Rechteckimpulsfolge mit doppelter Netzfrequenz,

(c) einen Frequenzteiler, auf den die Rechteckimpulsfolge aufgeschaltet ist,

(d) ein an der Netzwechselspannung anliegendes Halbleiterrelais mit Nullspannungsschalter-Verhalten, durch welches die Leistung schaltbar ist und

(e) Komparatormittel (160), welche in Abhängigkeit von einem Eingangssignal bei Überschreiten abgestufter Schwellwerte Ausgangssignale an einem ersten, einem zweiten und einem dritten Ausgang (164, 166, 168) liefert und

(f) eine Logikschaltung, auf welche die aus dem Ausgangssignal des Reglers abgeleiteten, von den Komparatormitteln gelieferten, diskreten Ausgangssignale und Ausgangssignale des Frequenzteilers aufgeschaltet sind und durch welche das Halbleiterrelais steuerbar ist.

### Zugrundeliegender Stand der Technik

Eine solche Vorrichtung ist durch die DE-A 2 837 934 bekannt.

Die DE-A 2 837 934 zeigt eine Vorrichtung zur Regelung der Auslauftemperatur bei elektrischen Durchlauferhitzern, bei denen eine durch einen Durchlaufkanal strömende Flüssigkeit durch eine in dem Durchlaufkanal angeordnete Heizwendel beheizbar ist. Dabei ist im Auslauf ein Temperaturfühler angeordnet. Der Temperaturfühler beaufschlagt einen Regler, wobei das Signal des Temperaturfühlers einen Istwert darstellt. An dem Regler ist ein Sollwert der Temperatur vorgegeben. Der Regler liefert ein Stellsignal an ein Stellglied, durch das die Heizleistung in Stufen steuerbar ist. Zu diesem Zweck liegt das Ausgangssignal des Reglers an mehreren Komparatoren mit abgestuften Referenzsignalen an, durch deren Ausgangssignale Stufen der Heizleistung über elektronische Relais zuschaltbar sind. Es ist eine für mehrere Stufen gemeinsame Heizwendelanordnung vorgesehen. Eine von der Netzspannung beaufschlagte Gleichrichter- und Schaltstufe erzeugt eine mit der Netzfrequenz synchrone Rechteckspannung. Die Rechteckspannung ist auf einen Binärzähler aufgeschaltet. Weiterhin ist ein Pulsbreitenmodulator vorgesehen, der ein Impulsverhältnis nach Massgabe einer Interpolation des Ausgangssignals des Reglers zwischen den Referenzsignalen der Komparatoren liefert. Das Stellglied enthält weiter eine Logikschaltung, auf welche die Ausgänge des Binärzählers und Ausgangssignale der Komparatoren und des Pulsbreitenmodulators aufgeschaltet sind. Durch das Ausgangssignal der Logikschaltung sind die elektronischen Relais so ansteuerbar, dass bei Ansprechen einer zunehmenden Anzahl von Komparatoren in einer nullten Stufe keine Wechselspannung auf die Heizwendelanordnung gegeben wird, in einer ersten Stufe jede dritte Halbwelle auf die Heizwendelanordnung durchgeschaltet wird, in einer zweiten Stufe jeweils eine Periode der Wechselspannung auf die Heizwendelanordnung durchgeschaltet, dann eine Halbwelle gesperrt und dann dieser Zyklus wiederholt wird und in einer dritten Stufe die volle Wechselspannung auf die Heizwendelanordnung geschaltet wird. Wenn das Ausgangssignal des Reglers zwischen zwei Referenzsignalen der Komparatoren liegt, wird die Heizleistung impulsartig nach Massgabe des Impulsverhältnisses zwischen zwei benachbarten Stufen geschaltet.

Eine solche Vorrichtung zur Regelung der Auslauftemperatur gestattet auch bei Durchlauferhitzern hoher Leistung eine genaue Regelung der Auslauftemperatur, ohne dass durch die Netzimpedanz bei der Schaltung der Leistung ein unzulässiges Flickern elektrischer Glühlampen eintritt.

### Offenbarung der Erfindung

Der Erfindung liegt die Aufgabe zugrunde, eine Schaltungsanordnung der eingangs genannten Art auf konstruktiv einfache und günstige Weise zu realisieren.

Erfindungsgemäss wird diese Aufgabe dadurch gelöst, dass

(g) das Halbleiterrelais für jeweils eine Halbperiode durchschaltbar ist, wenn an einem Steuereingang zum Zeitpunkt des Nulldurchganges der Netzspannung ein Signal anliegt, und

(h) durch die Logikschaltung zum Steuern des Halbleiterrelais in Abhängigkeit von einem durch das Ausgangssignal des Reglers bestimmtes diskretes Signal an den Steuereingang

– entweder ein erster Ausgang des Frequenzteilers anlegbar ist, an welchem ein Ausgangssignal jeweils durch eine Flanke jedes dritten Impulses gesetzt und durch die entsprechende Flanke des nächstfolgenden Impulses zurückgesetzt wird oder

– ein zweiter Ausgang des Frequenzteilers anlegbar ist, an welchem ein Ausgangssignal jeweils durch den jeden dritten Impuls gesetzt und durch den jeweils übernächsten Impuls zurückgesetzt wird,

(i) die besagte Logikschaltung zum Steuern des Halbleiterrelais (144)

– ein erstes UND-Glied (146) enthält, dessen einer Eingang (148) an dem ersten Ausgang (130) des Frequenzteilers (120) anliegt und

– ein zweites UND-Glied (150), dessen einer Eingang (152) an dem zweiten Ausgang (134) des Frequenzteilers (120) anliegt,
- ein ODER-Glied (153) mit drei Eingängen (154, 156, 158), an dessen erstem Eingang (154) der Ausgang des ersten UND-Gliedes (146) und an dessen zweitem Eingang (156) der Ausgang des zweiten UND-Gliedes (150) anliegt,
- der Ausgang des ODER-Gliedes den Ausgang der Logikschaltung bildet,

(j) der erste Ausgang (164) der Komparatormittel mit dem anderen Eingang (170) des ersten UND-Gliedes (146), der zweite Ausgang (166) der Komparatormittel mit dem anderen Eingang (172) des zweiten UND-Gliedes (150) und der dritte Ausgang (168) der Komparatormittel mit dem dritten Eingang (158) des ODER-Gliedes (153) verbunden ist,

(k) drei Halbleiterrelais (176, 178, 144) für je eine Phase des Drehstroms vorgesehen sind,

(l) die Komparatormittel (160) drei Gruppen von je drei Ausgängen (180, 182, 184; 186, 188, 190; 164, 166, 168) aufweisen und

(m) jede dieser Gruppen von Ausgängen auf jeweils eine Logikschaltung (192, 194, 196) von zwei UND-Gliedern (198, 200; 202, 204; 146, 150) und einem ODER-Glied (206, 208, 153) geschaltet ist, die ausserdem von den Ausgängen (130, 134) des Frequenzteilers (120) beaufschlagt ist, und

(n) durch die Logikschaltungen (192, 194, 196) je eines der drei Halbleiterrelais (176, 178, 144) steuerbar ist.

Der Schmitt-Trigger liefert Rechteckimpulse im Bereich der Maxima bzw. Minima der Netzwechselspannung. Die Flanken dieser Rechteckimpulse haben einen hinreichenden Abstand von den Nulldurchgängen der Netzwechselspannung. Ein solcher Nulldurchgang liegt jeweils zwischen zwei benachbarten Impulsen des Schmitt-Triggers. Wenn am ersten Ausgang des Frequenzteilers durch einen solchen Impuls ein Ausgangssignal gesetzt wird und dieses Ausgangssignal durch den nächstfolgenden Impuls zurückgesetzt wird, dann steht das Ausgangssignal während des dazwischenliegenden Nulldurchgangs der Wechselspannung an. Infolgedessen wird das Halbleiterrelais für die auf den Nulldurchgang folgende Halbperiode durchgeschaltet. Da nur jeder dritte Impuls der Impulsfolge ein solches Ausgangssignal setzt, wird auch nur jede dritte Halbwelle der Netzwechselspannung durch das Halbleiterrelais durchgeschaltet. Das hat zur Folge, dass aufeinanderfolgende, durchgeschaltete Halbwellen entgegengesetzte Polarität haben, so dass der Gleichstrommittelwert des fliessenden Stromes null wird.

Am zweiten Ausgang des Frequenzteilers wird ein Signal durch eine Flanke eines Impulses gesetzt und durch die entsprechende Flanke des übernächsten Impulses zurückgesetzt. Infolgedessen erscheint an dem zweiten Ausgang des Frequenzteilers ein Signal, das während zweier aufeinanderfolgender Nulldurchgänge der Netzwechselspannung ansteht. Wenn das Halbleiterrelais von dem Signal am zweiten Ausgang des Frequenzteilers gesteuert wird, dann wird jeweils eine volle Welle der Netzwechselspannung von dem Halbleiterrelais durchgeschaltet, während die daran anschliessende Halbwelle nicht durchgeschaltet wird. Auch bei dieser Betriebsweise sind aufeinanderfolgende, durchgeschaltete Wellen der Netzwechselspannung gegenphasig, so dass der Gleichstrommittelwert des durch den Verbraucher fliessenden Stromes null wird.

Die so an dem Frequenzteiler zur Verfügung gestellten Signale legen die jeweilige Arbeitsweise des Halbleiterrelais bereits eindeutig fest. Diese Ausgangssignale des Frequenzteilers werden über die Logikschaltung in Abhängigkeit vom Ausgangssignal des Reglers so auf die Halbleiterrelais in den drei Phasen des Drehstroms geschaltet, dass die Gesamtleistung in insgesamt neun relativ kleinen Schritten geschaltet werden kann.

Ausgestaltungen der Erfindung beziehen sich auf die Ansteuerung der Halbleiterrelais mit einem Impulsverhältnis, wenn das Ausgangssignal des Reglers zwischen diskreten, vorgegebenen Stufen liegt, sowie auf die Anschaltung nur eines Halbleiterrelais zur Speisung nur eines von drei Heizwiderständen, wenn der Durchfluss der zu erwärmenden Flüssigkeit einen bestimmten Grenzwert unterschreitet.

Diese Ausgestaltungen sind Gegenstand der abhängigen Patentansprüche.

Kurze Beschreibung der Zeichnungen

Fig. 1 ist eine schematische Darstellung eines elektrischen Durchlauferhitzers mit regelbarer Auslauftemperatur.

Fig. 2 zeigt die Schaltung der Heizwiderstände bei Vollastbetrieb, also bei grosser Wasserströmung im Durchlaufweg.

Fig. 3 ist eine schematische Darstellung eines Kanalblocks mit den darin angeordneten Heizkanälen.

Fig. 4 ist ein Blockschaltbild des Leistungsstellers zur Ansteuerung des Halbleiterrelais für eine Phase bei dem Durchlauferhitzer von Fig. 1.

Fig. 5 zeigt die von den Ausgängen des Frequenzteilers und den aus dem Ausgangssignal des Reglers abgeleiteten diskreten Signalen beaufschlagte Logikschaltung in dem Leistungssteller von Fig. 4.

Fig. 6 zeigt Signalverläufe in dem Leistungssteller von Fig. 4.

Fig. 7 zeigt die mit dem Leistungssteller von Fig. 4 in Abhängigkeit von dem Ausgangssignal des Reglers erhaltenen Zündmuster für die Halbleiterrelais.

Bevorzugte Ausführung der Erfindung

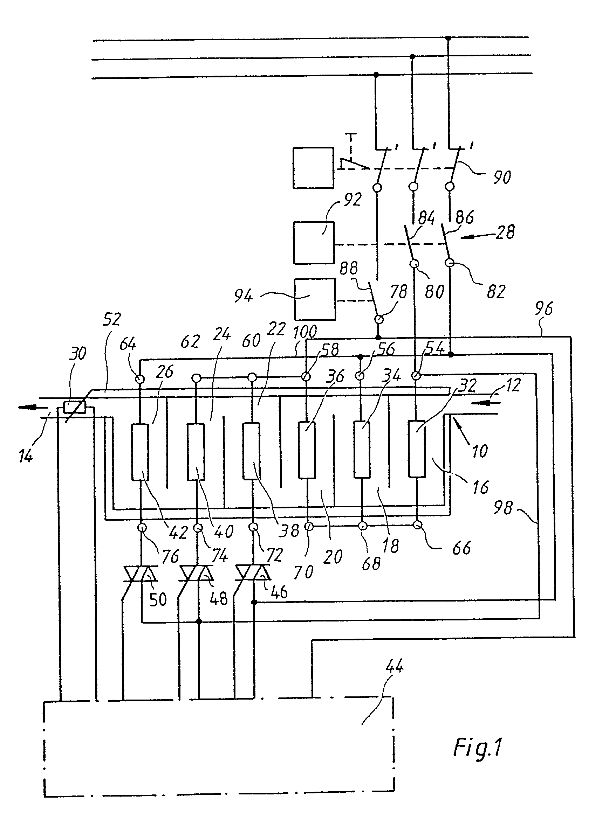

Der elektrische Durchlauferhitzer nach Fig. 1 bis 3 enthält einen Durchlaufweg 10 von einem Kaltwassereinlass 12 zu einem Warmwasserauslass 14 mit strömungsmässig in Reihe geschalteten Heizkanälen 16, 18, 20 und 22, 24, 26. Der Durchlauferhitzer enthält weiterhin auf eine Wasserströmung in dem Durchlaufweg 10 ansprechende, dreipolige, an drei Phasen eines Drehstroms anschliessbare Schaltmittel 28. Auslasseitig ist in dem Durchlaufweg 10 ein Temperaturfühler 30 angeordnet.

Heizwiderstände 32, 34 und 36 einer ersten Gruppe sind in den Heizkanälen 16, 18 bzw. 20 angeordnet und durch die Schaltmittel 28 bei Erreichen einer vorgegebenen Wasserströmung einschaltbar. In den Heizkanälen 22, 24 und 26 sind Heizwiderstände 38, 40 bzw. 42 einer zweiten Gruppe angeordnet. Ein Regler ist mit dem Temperaturfühler 30 verbunden. Durch den Regler sind die Heizwiderstände 38, 40 und 42 über Stellglieder und Halbleiterrelais mit Triacs 46 bzw. 48 bzw. 50 regelbar. Der Regler mit den Stellgliedern ist in Fig. 1 durch Block 44 dargestellt.

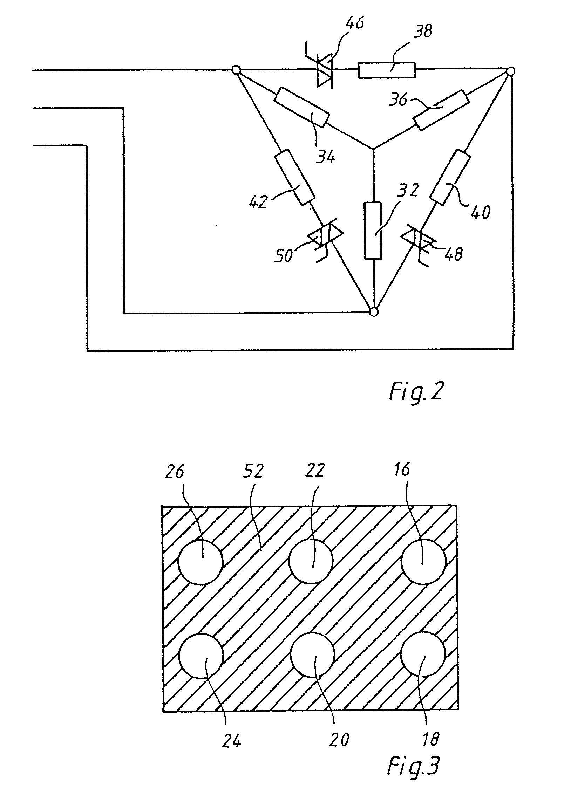

Wie auch aus Fig. 3 ersichtlich ist, weist der Durchlaufweg sechs geometrisch parallele, gerade Heizkanäle 16, 18, 20, 22, 24 und 26 auf, die in einem gemeinsamen Kanalblock 52 gebildet sind. Die Heizwiderstände 32, 34, 36, 38, 40 und 42 sind als unisoliert in den Heizkanälen angeordnete Heizwendeln ausgebildet. Die Heizwiderstände sind an den Enden der Heizkanäle 16, 18, 20, 22, 24 und 26 mit ersten Heizwiderstandsenden 54, 56, 58 und 60, 62, 64 bzw. zweiten Heizwiderstandsenden 66, 68, 70 und 72, 74, 76 aus dem Kanalblock 52 herausgeführt.

Wie aus Fig. 1 ersichtlich ist, sind die ersten Heizwiderstandsenden 54, 56, 58 der ersten Heizwiderstände 32, 34, 36 mit je einer Klemme 80 bzw. 82 bzw. 78 der dreipoligen Schaltmittel 28 verbunden. Da die zweiten Heizwiderstandsenden 66, 68 und 70 der ersten Heizwiderstände 32, 34, 36 miteinander verbunden sind, sind die ersten Heizwiderstände 32, 34 und 36 in einer Sternschaltung angeordnet, wenn an allen drei Klemmen 78, 70 und 82 der Schaltmittel 28 jeweils eine Phase des Drehstroms anliegt.

Von den zweiten Heizwiderständen 38, 40, 42 sind das erste Heizwiderstandsende 64 eines Heizwiderstandes 42 mit der Klemme 78 der Schaltmittel 28 und die ersten Heizwiderstandsenden 60 und 62 der beiden anderen Heizwiderstände 38 und 40 mit der Klemme 82 der Schaltmittel 28 verbunden. Weiterhin sind von den zweiten Heizwiderständen 38, 40 und 42 die zweiten Heizwiderstandsenden 76 und 74 des Heizwiderstandes 42 und des Heizwiderstandes 40, über je einen Triac 50 bzw. 48, der einen Teil eines Halbleiterrelais bildet, mit der Klemme 80 der Schaltmittel 28 verbunden. Das zweite Heizwiderstandsende 72 des Heizwiderstandes 38 ist ebenfalls über einen Triac 46 mit der Klemme 82 verbunden. Die Schaltmittel 28 weisen strömungsabhängig gesteuerte Schaltkontakte 84 und 86 auf, die bei einer ersten, niedrigeren Wasserströmung im Durchlaufweg schliessen. Über die Schaltkontakte 84 und 86 sind die Klemmen 82 bzw. 80 der Schaltmittel 28 mit je einer Phase des Drehstroms verbindbar. Die Schaltmittel 28 enthalten einen weiteren strömungsabhängig gesteuerten Schaltkontakt 88, der bei einer zweiten, höheren Wasserströmung im Durchlaufweg 10 schliesst. Über den Schaltkontakt 88 ist die Klemme 78 der Schaltmittel 28 mit der restlichen Phase des Drehstroms verbindbar. Weiterhin ist ein dreipoliger, druckabhängig gesteuerter Schalter 90 vorgesehen, über welchen bei Wegfall des Wasserdrucks alle drei Phasen des Drehstroms abschaltbar sind. In Fig. 1 sind die Schaltkontakte 84 und 86 einerseits und der Schaltkontakt 88 andererseits von je einem, auf die Wasserströmung ansprechenden Fühler 92 bzw. 94 gesteuert. In der Praxis bilden die Fühler 92 und 94 und die Schaltkontakte 84, 86 und 88 eine Einheit. Durch eine vom Differenzdruck im Durchlaufweg 10 beaufschlagte, vorbelastete Membran werden nacheinander erst die Schaltkontakte 84 und 86 und dann der Schaltkontakt 88 geschlossen.

Über eine Leitung 96 wird dem Regler das Schliessen des Schaltkontaktes 88 signalisiert.

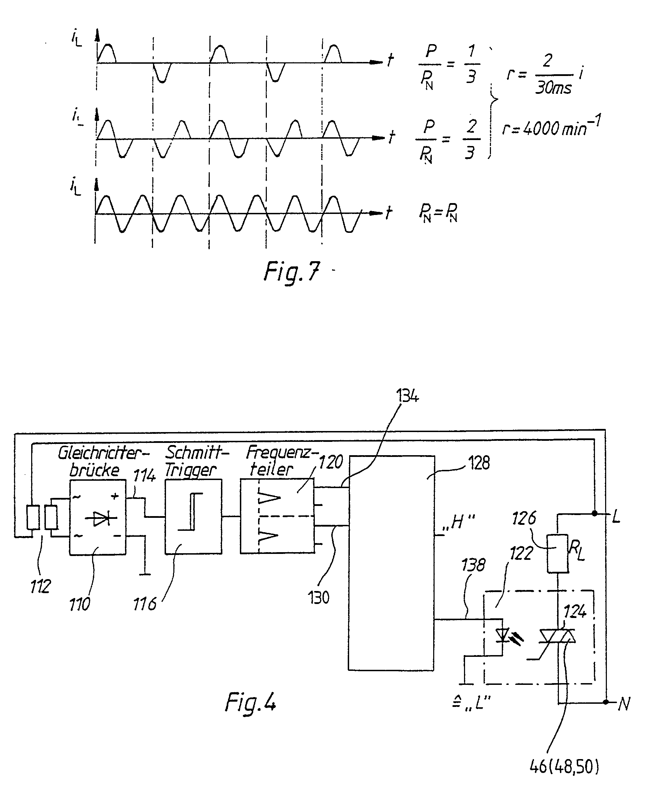

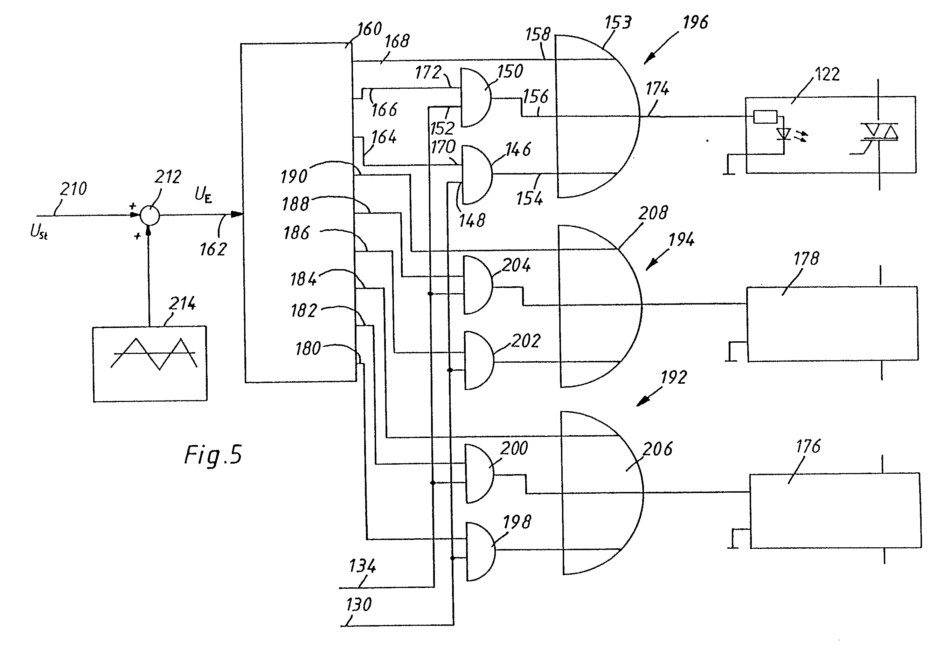

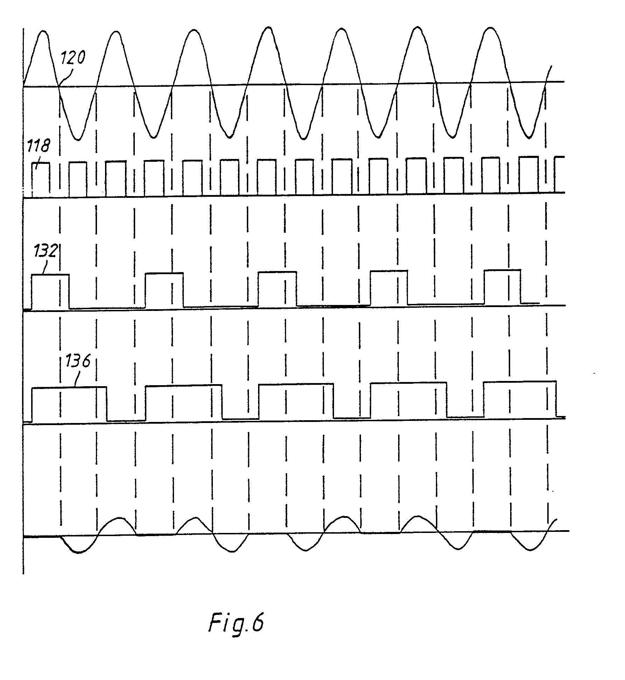

Fig. 4 zeigt Einzelheiten des Blocks 44 mit Regler und Leistungssteller. Block 44 enthält eine Gleichrichterbrücke 110, die über einen Transformator 112 von netzfrequenter, mit der Netzfrequenz gleichphasiger Wechselspannung beaufschlagt ist. Die Gleichrichterbrücke 110 liefert an einem Ausgang 114 eine mit der doppelten Netzfrequenz pulsierende Gleichspannung. Diese pulsierende Gleichspannung ist auf einen Schmitt-Trigger 116 aufgeschaltet. Der Schmitt-Trigger 116 erzeugt eine Rechteckimpulsfolge, die in der zweiten Zeile von Fig. 6 dargestellt ist. Der Schmitt-Trigger schaltet, solange das anliegende Signal einen vorgegebenen Schwellwert überschreitet. Das bedeutet, dass die Rechteckimpulse 118 im wesentlichen symmetrisch zu den Maxima und Minima der Netzwechselspannung und im Abstand von den Nulldurchgängen der Netzwechselspannung liegen. Die Rechteckimpulsfolge ist auf einen Frequenzteiler 120 aufgeschaltet. Mit 122 ist ein Halbleiterrelais mit Nullspannungsschalter-Verhalten bezeichnet. Das Halbleiterrelais 122 enthält einen Triac 46, 48 oder 50, der in Reihe mit einem Verbraucher 126 in Form eines der Heizwiderstände 38, 40, 42 an der Netzwechselspannung anliegt. Es ist eine Logikschaltung 128 zum Steuern des Halbleiterrelais 122 in Abhängigkeit von Ausgangssignalen des Frequenzteilers 120 und des Ausgangssignals des Reglers vorgesehen. Bei der beschriebenen Anordnung besteht der Frequenzteiler 120 aus zwei J-K Flip-Flops. Von den vier Ausgängen der J-K Flip-Flops werden nur zwei Ausgänge benutzt. An einem ersten Ausgang 130 erscheint ein Ausgangssignal 132 (Fig. 6), welches jeweils durch eine Flanke, hier die Vorderflanke, jedes dritten Impulses 118 der Rechteckimpulsfolge gesetzt und durch die entsprechende Flanke des nächstfolgenden Impulses 118 zurückgesetzt wird. Das Ausgangssignal am Ausgang 130 ist somit eine Impulsfolge, wie sie in der dritten Zeile von Fig. 5 dargestellt ist. An einem zweiten Ausgang 134 des Frequenzteilers 120 erscheint ein Ausgangssignal 136, welches jeweils durch eine Flanke jedes dritten Impulses 118 der Rechteckimpulsfolge gesetzt und durch die entsprechende Flanke des jeweils übernächsten Impulses zurückgesetzt wird. Das Ausgangssignal 136 liefert eine Impulsfolge, wie sie in der vierten Zeile von Fig. 6 dargestellt ist. Das Halbleiterrelais 122 ist für jeweils eine Halbperiode durchschaltbar, wenn an einem Steuereingang 138 zum Zeitpunkt des Nulldurchgangs der Netzspannung ein Signal anliegt. Solche Halbleiterrelais sind an sich bekannt und handelsüblich erhältlich. Daher ist der Aufbau des Halbleiterrelais 122 nur schematisch angedeutet.

Wie aus Fig. 6 ersichtlich ist, liegt jeweils ein Nulldurchgang 121 der Netzwechselspannung zwischen zwei benachbarten Impulsen 118 der Rechteckimpulsfolge. In jeden Impuls des Ausgangssignals 132 fällt ein solcher Nulldurchgang. Zwischen aufeinanderfolgenden Impulsen des Ausgangssignals 132 liegen jeweils zwei Nulldurchgänge der Netzwechselspannung, bei denen kein Ausgangssignal 132 am Ausgang 130 liegt. Jeder Impuls des Ausgangssignals 136 am Ausgang 134 des Frequenzteilers 120 erstreckt sich über zwei aufeinanderfolgenden Nulldurchgänge 121 der Netzwechselspannung. Zwischen aufeinanderfolgenden Impulsen des Ausgangssignals 136 liegt ein Nulldurchgang der Netzwechselspannung, bei welchem kein Signal am Ausgang 134 ansteht. Wenn das Halbleiterrelais 122 von dem ersten Ausgangssignal 132 gesteuert wird, dann wird das Halbleiterrelais während jeweils einer Halbperiode der Wechselspannung leitend, auf die dann jeweils zwei Halbperioden folgen, während welcher das Halbleiterrelais 122 keinen Strom durchlässt. Wenn das Halbleiterrelais 122 von dem zweiten Ausgangssignal 136 am Ausgang 134 gesteuert wird, dann wird es während zweier aufeinanderfolgender Halbperioden leitend, an die sich eine Halbperiode anschliesst, während welcher das Halbleiterrelais 122 nicht leitend ist. Der Strom durch Verbraucher 126, also einen der Heizwiderstände 38, 40 oder 42, hat dann die in der vorletzten Zeile von Fig. 6 dargestellte Form.

In Fig. 5 ist die Logikschaltung 128 zum Steuern des Halbleiterrelais für ein Halbleiterrelais 122 dargestellt. Die Logikschaltung 128 enthält ein erstes UND-Glied 146, dessen Eingang 148 an dem ersten Ausgang 130 des Frequenzteilers anliegt, sowie ein zweites UND-Glied 150, dessen einer Eingang 152 an dem zweiten Ausgang 134 des Frequenzteilers 120 anliegt, und ein ODER-Glied 153 mit drei Eingängen 154, 156 und 158. Weiterhin ist ein Komparator 160 vorgesehen, der in Abhängigkeit von einem Eingangssignal an einem Eingang 162 bei Überschreiten abgestufter Schwellwerte Ausgangssignale an einem ersten, einem zweiten und einem dritten Ausgang 164 bzw. 166 bzw. 168 liefert. Der erste Ausgang 164 des Komparators 160 ist mit dem anderen Eingang 170 des ersten UND-Gliedes 146 verbunden. Der zweite Ausgang 166 des Komparators 160 ist mit dem anderen Eingang 172 des zweiten UND-Gliedes 150 verbunden. Die Ausgänge der UND-Glieder 146 und 150 sind mit dem ersten Eingang 154 bzw. dem zweiten Eingang 156 des ODER-Gliedes 153 verbunden. An dem dritten Eingang 158 des ODER-Gliedes 153 liegt der dritte Ausgang 168 des Komparators 160. Der Ausgang 174 des ODER-Gliedes 153 steuert das Halbleiterrelais 144.

Bei einem Anstieg des Eingangssignals erscheint ein Signal «H» nacheinander an den Ausgängen 164, 166 und 168. Bei einem relativ kleinen Eingangssignal entsprechend beispielsweise einer relativ kleinen Regelabweichung, erscheint ein Ausgangssignal an dem ersten Ausgang 164 des Komparators 160. Über das UND-Glied 146 wird daher das Signal 132 (Fig. 5) vom Ausgang 130 des Frequenzteilers 120 an dem Eingang 154 des ODER-Gliedes 153 wirksam, während an den Eingängen 156 und 158 des ODER-Gliedes 153 kein Signal anliegt. Das damit am Ausgang 174 des ODER-Gliedes 153 erscheinende Signal (132) steuert das Halbleiterrelais 144 während jeder dritten Halbwelle auf, so dass durch den Verbraucher ein Strom entsprechend der ersten Zeile von Fig. 6 fliesst. Bei einem weiteren Anstieg des Signals am Eingang 162 erscheint ein Signal «H» auch am Ausgang 166 des Komparators 160. Über das UND-Glied 150 wird jetzt das Signal 136 vom Ausgang 132 des Frequenzteilers 120 am Eingang 156 des ODER-Gliedes 153 und damit auch am Ausgang 174 des ODER-Gliedes 153 wirksam. Das Halbleiterrelais 144 wird jeweils während zwei aus drei Halbperioden der Wechselspannung aufgesteuert, so dass durch den Verbraucher ein Strom entsprechend der zweiten Zeile von Fig. 6 fliesst. Schliesslich wird bei einem weiteren Anstieg des Signals am Eingang 132 ein Signal «H» auch an dem dritten Ausgang 168 des Komparators 160 wirksam, der unmittelbar mit dem dritten Eingang 158 des ODER-Gliedes 153 verbunden ist. Am Ausgang 174 des ODER-Gliedes 153 erscheint daher ein Dauersignal «H». Das Halbleiterrelais 144 wird ständig aufgesteuert, so dass die volle Netzwechselspannung am Verbraucher wirksam wird.

Bei der in Fig. 5 dargestellten bevorzugten Ausführung sind drei Halbleiterrelais 176, 178 und 122 für je eine Phase eines Drehstroms vorgesehen. Der Komparator 160 weist drei Gruppen von Ausgängen 180, 182, 184 sowie 186, 188, 190 und 164, 166, 168 auf.

Jede dieser Gruppen von Ausgängen ist auf jeweils eine Logikschaltung 192, 194, 196 von zwei UND-Gliedern 198, 200 sowie 202, 204 und 146, 150 und einem ODER-Glied 206, 208, 153 geschaltet, die in der im Zusammenhang mit Gruppe 196 beschriebenen Weise verknüpft und ausserdem von den Ausgängen 130, 134 des Frequenzteilers 120 beaufschlagt ist. Durch die Logikschaltungen 192, 194 und 196 ist jeweils eines der drei Halbleiterrelais steuerbar.

Bei der beschriebenen Anordnung erscheint das Signal «H» bei einem Anstieg des Signals am Eingang 162 nacheinander an den Ausgängen 180, 182, 184, 186, 188, 164, 166 und 168. Es wird daher über die Logikschaltung 192 zunächst das Halbleiterrelais 176 in der beschriebenen Weise in drei Stufen gesteuert, bis bei Auftreten eines Signals am Ausgang 184 die von dem Halbleiterrelais 176 gesteuerte Phase des Drehstroms voll durchgeschaltet ist. Bei weiterem Anstieg des Eingangssignals wird über das Halbleiterrelais 178 die zweite Phase des Drehstroms in der beschriebenen Weise in drei Stufen gesteuert, während die erste Phase weiterhin voll durchgesteuert bleibt. Schliesslich wird über die Ausgänge 164, 166 und 168 die dritte Phase des Drehstroms mittels des Halbleiterrelais 144 gesteuert. Die installierte Leistung kann somit insgesamt neun Stufen geschaltet werden.

Bei der dargestellten Ausführung werden die drei Phasen des Drehstroms nacheinander stufenweise zugeschaltet. Es ist auch möglich, statt dessen nacheinander jede der drei Phasen mit einem Drittel der Leistung einzuschalten, dann nacheinander jede der Phasen mit zwei Drittel der Leistung und schliesslich nacheinander jede der drei Phasen mit voller Leistung.

Eine andere Möglichkeit (bei Verwendung eines Komparators mit drei Ausgängen) besteht darin, gleichzeitig alle drei Halbleiterrelais 176, 178 und 144 anzusteuern und in drei Stufen zu schalten.

Die erstere Variante erhält man dadurch, dass man die Verbindung der UND-Glieder mit den Ausgängen 182 und 186, mit den Ausgängen 184 und 164 und mit den Ausgängen 190 und 166 vertauscht. Diese Variante hat den Vorteil einer gleichmässigeren Belastung des Drehstromnetzes.

Bei der dargestellten Ausführung ist das Eingangssignal am Eingang 162 des Komparators 160 von einer stetig veränderlichen Steuerspannung an einem Eingang 210 und einer der Steuerspannung in einem Summierpunkt 212 überlagerten Dreieckspannung von einem Dreieckgenerator 214 gebildet. Eine solche Anordnung bewirkt eine Pulsbreitenmodulation, wobei die Leistung jeweils zwischen den zwei höchsten angesteuerten Leistungsstufen hin- und hergeschaltet wird. Beispielsweise erscheint ein Signal «H» an dem Ausgang 190 als Dauersignal, während an dem Ausgang 164 ein Signal mit einer Impulsbreite auftritt, die sich stetig mit dem Signal am Eingang 210 ändert. Es kann auf diese Weise die zugeführte Leistung stetig verändert werden. Die gepulste Leistung entspricht dabei der Leistungsdifferenz zwischen zwei aufeinanderfolgenden Stufen. Die Frequenz, mit welcher die Leistung gepulst wird, wird durch den Dreieckgenerator 214 vorgegeben.

Die beschriebene Anordnung arbeitet wie folgt:

Es wird in jedem Fall einmal eine feste Heizleistung über die ersten Heizwiderstände und gleichzeitig eine regelbare Heizleistung über die zweiten Heizwiderstände eingeschaltet. Je nach der Wasserströmung im Durchlaufweg 10 ergeben sich jedoch zwei Betriebsweisen: Bei geringem Wasserdurchfluss sind nur die Schaltkontakte 84 und 86 der Schaltmittel 28 geschlossen. In diesem Falle liegen die Heizwiderstände 32 und 34 in Reihe zwischen zwei Phasen des Drehstroms. Es ergibt sich dadurch eine relativ niedrige feste Heizleistung. Gleichzeitig wird in dem Heizkanal 26 durch den Heizwiderstand 42 eine regelbare Heizleistung erzeugt. Der Stromkreis verläuft dabei über den Schaltkontakt 84 zur Klemme 80 über eine Leitung 98 und den Triac 50 zu dem zweiten Heizwiderstandsende 76 des Heizwiderstandes 42, weiter über den Heizwiderstand 42, das Heizwiderstandsende 64 und eine Leitung 100 zu der Klemme 82 und dem Schaltkontakt 86 der Schaltmittel 28. Bei niedriger Wasserströmung erfolgt also eine Heizung mit einer niedrigen, festen Heizleistung über Heizwiderstände 32 und 34 und einer relativ niedrigen variablen Heizleistung über den Heizwiderstand 42. Die Stromkreise der Heizwiderstände 36, 38 und 40 sind durch den Schaltkontakt 88 unterbrochen.

Wenn die Wasserströmung im Durchlaufweg 10 einen bestimmten, höheren Schwellwert überschreitet, schliesst auch der Schaltkontakt 88. Jetzt wird eine Schaltung hergestellt, wie sie in Fig. 2 dargestellt ist. Die drei ersten Heizwiderstände 32, 34 und 36 sind dabei, wie schon erwähnt, in einer Sternschaltung angeordnet, während die Heizwiderstände 38, 40, 42 mit den jeweils in Reihe liegenden Triacs 46, 48 und 50 eine Dreieckschaltung bilden. Bei einem Durchlauferhitzer von 18 KW Gesamtleistung kann beispielsweise die Grundleistung, die von den Heizwiderständen 32, 34 und 36 abgegeben wird, 6 KW betragen, während die regelbare Leistung in Dreieckschaltung 12 KW beträgt.

Durch den Leistungssteller gemäss Fig. 4 und Fig. 5 können verschiedene Stromverläufe durch den Verbraucher 126 erzeugt werden, wie sie in Fig. 7 dargestellt sind. Wenn der Ausgang 174 ständig an dem Signal «L» liegt, dann ist der Triac z.B. 46 ständig gesperrt. Es fliesst kein Strom. Liegt der Ausgang 174 an dem Ausgang 130 des Frequenzteilers 120, dann wird, wie in der ersten Zeile von Fig. 7 dargestellt ist, jede dritte Halbwelle der Netzwechselspannung zum Verbraucher 126 durchgelassen. Ist der Ausgang 174 mit dem dritten Ausgang 134 des Frequenzteilers 120 verbunden, dann ergibt sich, wie schon in Zusammenhang mit Fig. 6 erläutert wurde, ein Stromverlauf im Verbraucher 126 entsprechend der zweiten Zeile von Fig. 7. Wenn der Ausgang 174 an das Dauersignal «H» angelegt wird, dann bleibt der Triac 46 ständig leitend. Es wird die volle Netzwechselspannung zum Verbraucher 126, also dem zugehörigen Heizwiderstand, durchgelassen. Dementsprechend ist der Verbraucher 126 je nach Stellung dem Ausgang 174 entweder abgeschaltet, mit 1/3 der Leistung, mit 2/3 der Leistung oder mit der vollen Leistung beaufschlagt. Wie aus Fig. 7 ersichtlich ist, ist in jedem Fall der Gleichstrommittelwert des durch den Verbraucher 126 fliessenden Stromes null.

Mit einer Anordnung der beschriebenen Art lässt sich eine Temperaturregelung für einen elektrischen Durchlauferhitzer durchführen, wobei die Forderungen der DIN EN 50006/VDE 0838 erfüllt sind.

**Patentansprüche**

1. Vorrichtung zur Regelung der Auslauftemperatur bei elektrischen Durchlauferhitzern, bei denen der Strom in vom Wasser durchflossenen Heizkanälen angeordneten Heizwiderständen mittels eines im auf die Wassertemperatur ansprechenden Temperaturfühlers, eines von dem Temperaturfühler beaufschlagten Reglers und eines elektronischen Leistungsstellers regelbar ist, enthaltend:

(a) eine von netzfrequenter Wechselspannung beaufschlagte Gleichrichterbrücke (110), welche eine mit der doppelten Netzfrequenz pulsierende Gleichspannung liefert,

(b) einen Schmitt-Trigger (116), auf den die pulsierende Gleichspannung aufgeschaltet ist, zur Erzeugung einer Rechteckimpulsfolge mit doppelter Netzfrequenz,

(c) einen Frequenzteiler (120), auf den die Rechteckimpulsfolge aufgeschaltet ist,

(d) ein an der Netzwechselspannung anliegendes Halbleiterrelais (122) mit Nullspannungsschalter-Verhalten, durch welches die Leistung schaltbar ist,

(e) Komparatormittel (160), welche in Abhängigkeit von einem Eingangssignal bei Überschreiten abgestufter Schwellwerte Ausgangssignale an einem ersten, einem zweiten und einem dritten Ausgang (164, 166, 168) liefert und

(f) eine Logikschaltung, auf welche die aus dem Ausgangssignal des Reglers abgeleiteten, von den Komparatormitteln gelieferten diskreten Ausgangssignale und Ausgangssignale des Frequenzteilers (120) aufgeschaltet sind und durch welche das Halbleiterrelais (122) steuerbar ist, dadurch gekennzeichnet, dass

(g) das Halbleiterrelais (122) für jeweils eine Halbperiode durchschaltbar ist, wenn an einem Steuereingang (138) zum Zeitpunkt des Nulldurchganges (121) der Netzspannung ein Signal anliegt, und

(h) durch die Logikschaltung (128) zum Steuern des Halbleiterrelais (122) in Abhängigkeit von einem durch das Ausgangssignal des Reglers bestimmtes diskretes Signal an den Steuereingang (138)

– entweder ein erster Ausgang (130) des Frequenzteilers (120) anlegbar ist, an welchem ein Ausgangssignal (132) jeweils durch eine Flanke jedes dritten Impulses (118) gesetzt und durch die entsprechende Flanke des nächstfolgenden Impulses zurückgesetzt wird, oder

– ein zweiter Ausgang (134) des Frequenzteilers anlegbar ist, an welchem ein Ausgangssignal (136) jeweils durch jeden dritten Impuls (118) gesetzt und durch den jeweils übernächsten Impuls zurückgesetzt wird.

(i) Die besagte Logikschaltung zum Steuern des Halbleiterrelais (144)

– ein erstes UND-Glied (146) enthält, dessen einer Eingang (148) an dem ersten Ausgang (130) des Frequenzteilers (120) anliegt und

– ein zweites UND-Glied (150), dessen einer Eingang (152) an dem zweiten Ausgang (134) des Frequenzteilers (120) anliegt,

– ein ODER-Glied (153) mit drei Eingängen (154, 156, 158), an dessen erstem Eingang (154) der Ausgang des ersten UND-Gliedes (146) und an dessen zweitem Eingang (156) der Ausgang des zweiten UND-Gliedes (150) anliegt,

– der Ausgang des ODER-Gliedes den Ausgang der Logikschaltung bildet

(j) der erste Ausgang (164) der Komparatormittel mit dem anderen Eingang (170) des ersten UND-Gliedes (146), der zweite Ausgang (166) der Komparatormittel mit dem anderen Eingang (172) des zweiten UND-Gliedes (150) und der dritte Ausgang (168) der Komparatormittel mit dem dritten Eingang (158) des ODER-Gliedes (153) verbunden ist,

(k) drei Halbleiterrelais (176, 178, 144) für je eine Phase des Drehstroms vorgesehen sind,

(l) die Komparatormittel (160) drei Gruppen von je drei Ausgängen (180, 182, 184; 186, 188, 190; 164, 166, 168) aufweisen und

(m) jede dieser Gruppen von Ausgängen auf jeweils eine Logikschaltung (192, 194, 196) von zwei UND-Gliedern (198, 200; 202, 204; 146, 150) und einem ODER-Glied (206, 208, 153) geschaltet ist, die ausserdem von den Ausgängen (130, 134) des Frequenzteilers (120) beaufschlagt ist, und

(n) durch die Logikschaltungen (192, 194, 196) je eines der drei Halbleiterrelais (176, 178, 144) steuerbar ist.

2. Vorrichtung nach Anspruch 1, dadurch gekennzeichnet, dass das Eingangssignal der Komparatormittel (160) von einer stetig veränderlichen Steuerspannung und einer der Steuerspannung überlagerten Dreieckspannung gebildet ist.

3. Vorrichtung nach einem der Ansprüche 1 oder 2, dadurch gekennzeichnet, dass

(a) sechs geometrisch parallele, gerade Heizkanäle (16...26) in einem gemeinsamen Kanalblock (52) gebildet sind,

(b) eine erste Gruppe von drei Heizwiderständen (32, 34, 36) in dreien dieser Heizkanäle (16, 18, 20) angeordnet ist und eine zweite Gruppe von drei Heizwiderständen (38, 40, 42) in den übrigen drei Heizkanälen (22, 24, 26) angeordnet ist,

(c) die Heizwiderstände (32...42) an den Enden der Heizkanäle (16...26) jeweils mit ersten und zweiten Heizwiderstandsenden (54...64 bzw. 66...76) aus dem Kanalblock (52) herausgeführt sind,

(d) auf Wasserströmung im Durchlaufweg des Durchlauferhitzers ansprechende, dreipolige, an drei Phasen eines Drehstromes anschliessbare Schaltmittel (28) vorgesehen sind,

(e) die ersten Heizwiderstandsenden (54, 56, 58) der Heizwiderstände der ersten Gruppe direkt mit je einer ersten, zweiten bzw. dritten Klemme (80, 82, 78) der Schaltmittel (28) verbunden sind,

(f) die zweiten Heizwiderstandsenden (66, 68, 70) der Heizwiderstände der ersten Gruppe miteinander verbunden sind,

(g) von den ersten Heizwiderstandsenden (60, 62, 64) der Heizwiderstände (38, 40, 42) der zweiten Gruppe ein erstes und ein zweites (60, 62) miteinander und mit der dritten Klemme (78) der Schaltmittel (28) verbunden sind und das dritte Heizwiderstandsende (64) mit der zweiten Klemme (82) der Schaltmittel (28) verbunden ist,

(h) von den zweiten Heizwiderstandsenden (72, 74, 76) der Heizwiderstände (38, 40, 42) der zweiten Gruppe

- ein erstes Heizwiderstandsende über einen elektronischen Schalter (46) des ersten Halbleiterrelais (176) mit der zweiten Klemme (82) verbunden ist,

- das zweite und das dritte Heizwiderstandsende über je einen elektronischen Schalter (48, 50) des zweiten und des dritten Halbleiterrelais (178, 144) miteinander und mit der dritten Klemme (80) der Schaltmittel (28) verbunden ist und

(i) die Schaltmittel (28) strömungsabhängig gesteuerte Schaltkontakte (84, 86) aufweisen, die bei einer ersten, niedrigeren Wasserströmung im Durchlaufweg schliessen und über welche die erste und die zweite Klemme (80, 82) der Schaltmittel (28) mit je einer Phase des Drehstroms verbindbar sind, sowie

(j) einen weiteren strömungsabhängig gesteuerten Schaltkontakt (88), der bei einer zweiten, höheren Wasserströmung im Durchlaufweg (10) schliesst und über welchen die dritte Klemme (78) der Schaltmittel (28) mit der restlichen Phase des Drehstroms verbindbar ist.

## Revendications

1. Dispositif déstiné à commander la température de sortie dans des chauffes-eau instantanés électriques dans lesquels le courant dans des résistances de chauffage disposées dans des passages de chauffage passés par de l'eau est commandable au moyen d'un palpeur pyrométrique répondant à la température d'eau, d'un régulateur connecté au palpeur de température et d'un dispositif de réglage de la puissance, comprenant:

(a) un rédresseur en pont (110) connecté à une tension alternative à fréquence du réseau et fournissant une tension continue pulsant à double fréquence du réseau,

(b) une bascule de Schmitt (116) à laquelle la tension continue pulsante est appliquée afin d'engendrer une séquence d'impulsions carrées à double fréquence du réseau,

(c) un diviseur de fréquence (120) auquel est appliqué la séquence d'impulsions carrées,

(d) un relais semiconducteur (122) avec attitude de commutateur de tension zéro, connecté à la tension alternative du réseau et par lequel la puissance est commutable,

(e) des moyens de comparaison (160) qui fournissent des signaux de sortie à une première, une deuxième et une troisième sortie (164, 166, 168) comme fonction d'un signal d'entrée lorsque des valeurs seuil échelonnées sont dépassées, et

(f) un circuit logique auquel les signaux de sortie discrets fournis par les moyens de comparaison et dévisés du signal de sortie du régulateur et les signaux de sortie du diviseur de fréquence (120) sont appliqués et qui peut commander le relais semiconducteur (122), caractérisé par le fait que

(g) le relais semiconducteur (122) peut être rendu conductif pour respectivement une demi-période, lorsque un signal est appliqué à une entrée de commande (138) au moment du passage zéro (121) de la tension du réseau,

(h) par le circuit logique (128) déstiné à commander le relais semiconducteur (122) en fonction d'un signal discret déterminé par le signal de sortie du régulateur,

- soit une première sortie (130) du diviseur de fréquence (120) est connectable à l'entrée de commande (138), à cette sortie un signal de sortie (132) étant mis respectivement par un flanc de chaque troisième impulsion (118) et remis par le flanc correspondant de l'impulsion suivant, soit

- une deuxième sortie (134) du diviseur de fréquence est connectable à l'entrée de commande (138), à cette sortie un signal de sortie (136) étant mis respectivement par chaque troisième impulsion (118) et remis par respectivement la deuxième impulsion qui suit,

(i) ledit circuit logique déstiné à commander le relais semiconducteur (144)

- comprend un premier opérateur ET (146) dont l'entrée (148) est connectée à la première sortie (130) du diviseur de fréquence (120), et

- un deuxième opérateur ET (150) dont une entrée (152) est connectée à la deuxième sortie (134) du diviseur de fréquence (120),

- un opérateur OU (153) avec trois entrées (154, 156, 158), la sortie du premier opérateur ET (146) étant connectée à la première entrée (154) et la sortie du deuxième opérateur ET étant connectée à la deuxième entrée (156)

- la sortie de l'opérateur OU forme la sortie du circuit logique,

(j) la première sortie (164) des moyens de comparaison est connectée à l'autre entrée (170) du premier opérateur ET (146), la deuxième sortie (166) des moyens de comparaison est connectée à l'autre entrée (172) du deuxième opérateur ET (150) et la troisième sortie (168) des moyens de comparaison est connectée à la troisième entrée (158) de l'opérateur OU (153),

(k) trois relais semiconducteur (176, 178, 144) sont prévus pour une phase respective du courant triphasé,

(l) les moyens de comparaison (160) ont trois groupes de respectivement trois sorties (180, 182, 184; 186, 188, 190; 164, 166, 168), et

(m) chacun de ces groupes de sortie est respectivement connecté à un circuit logique (192, 194, 196) de deux opérateurs ET (198, 200; 202, 204; 146, 150) et d'un opérateur OU (206, 208, 153), ce circuit logique étant également connecté aux sorties (130, 134) du diviseur de fréquence (120), et

(n) l'un des trois relais semiconducteurs (176, 178, 144) à la fois est commandable par les circuits logiques (192, 194, 196).

2. Dispositif selon la revendication 1, caractérisé par le fait que le signal d'entrée des moyens de comparaison (160) est formé par une tension de commande continuellement variable et une tension en triangle superposée à la tension de commande.

3. Dispositif selon la revendication 1, caractérisé par le fait que

(a) six passages de chauffages géométriquement parallèles rectilignes (16...26) sont formés dans un bloc de passage (52) commun,

(b) un premier groupe de trois résistances de chauffage (32, 34, 36) est disposé dans trois de ces passages de chauffage (16, 18, 20), et un deuxième groupe de trois résistances de chauffage (38, 40, 42) est disposé dans les autres trois passages de chauffage (22, 24, 26).

(c) les résistances de chauffage (32...42) aux extrémités des passages de chauffage (16...26) sont guidées hors du bloc de passage (52) respectivement avec des premières et des secondes extrémités de résistance de chauffage (54...64) et 66...76, respectivement),

(d) des moyens de commutation (28) tripolaires sont prévus, qui sont connectables à trois phases d'un courant triphasé et qui répondent à l'écoulement d'eau dans la voie de passage du chauffe-eau,

(e) les premières extrémités de résistance de chauffage (54, 56, 58) des résistances de chauffage du premier groupe sont directement connectées à respectivement une première, une deuxième et une troisième borne de connexion (80, 82, 78) des moyens de commutation (28),

(f) les secondes extrémités de résistance de chauffage (66, 68, 70) des résistances de chauffage du premier groupe sont interconnectées,

(g) une première et une deuxième (60, 62) des premières extrémités de résistance de chauffage (60, 62, 64) des résistances de chauffage (38, 40, 42) du deuxième groupe sont interconnectées et connectées à la troisième borne de connexion (78) des moyens de commutation (28), et la troisième extrémité de résistance de chauffage (64) est connectée à la deuxième borne de connexion (82) des moyens de commutation (28),

(h) des secondes extrémités de résistance de chauffage (72, 74, 76) des résistance de chauffage (38, 40, 42) du second gorupe
— une première extrémité de résistance de chauffage est connectée à la deuxième borne de connexion (82) par un commutateur électronique (46) du premier relais semiconducteur (176),
— la deuxième et la troisième extrémité de résistance de chauffage sont interconnectées et connectée à la troisième borne de connexion (80) des moyens de commutation (28) respectivement par un commutateur électronique (48, 50) du deuxième et du troisième relais semiconducteur (178, 144), et

(i) les moyens de commutation (28) ont des contacts de commutation (84, 86) commandés en fonction de l'écoulement, fermant à un premier écoulement d'eau relativement bas dans la voie de passage (10) et qui peuvent connecter la première et la deuxième borne de connexion (80, 82) des moyens de commutation (28) à une phase respective du courant triphasé, ainsi que

(j) un autre contact de commutation (80) commandé en fonction de l'écoulement, fermant à un second écoulement d'eau relativement élevé dans la voie de passage (10) et qui peut connecter la troisième borne de connexion (78) des moyens de commutation (28) à la phase restante du courant triphasé.

**Claims**

1. Device for controlling the outlet temperature in electronic continuous-flow water heaters, in which the current in heating resistors arranged in heating passages flown-through by water, is controllable by means of a temperature sensor responding to the water temperature, a power control connected to the temperature sensor and an electronic power adjusting device, comprising:

(a) a rectifier bridge (110) connected to a mains frequency a.c. voltage and supplying a d.c. voltage pulsating with twice the mains frequency,

(b) a Schmitt-trigger (116) to which the pulsating d.c. voltage is applied for generating a square wave pulse sequence with twice the mains frequency,

(c) a frequency divider (120) to which the square wave pulse sequence is applied,

(d) a semiconductor relay (122) with zero voltage switch characteristics connected to the mains a.c. voltage, and arranged to switch the power,

(e) comparator means (160) which provide output signals at a first, a second and a third output (164, 166, 168) as a function of an input signal when stepped threshold values are exceeded and

(f) a logic circuit to which the discrete output signals derived from the output signal of the power control and supplied by the comparator means, and the output signals of the frequency divider (120) are applied and which is arranged to control the semiconductor relay (122), characterized in that

(g) the semiconductor relay (122) is arranged to be rendered conductive for one half cycle, if a signal is applied to a control input (138) at the time of the zero crossing (121) of the mains voltage and

(h) the logic circuit (128) for controlling the semiconductor relay (122) as a function of a discrete signal determined by the output signal of the power control is arranged
— either to connect a first output (130) of the frequency divider (120) to the control input (138), at which output an output signal (132) is set by an edge of each third pulse (118) and is reset by the corresponding edge of the following pulse, or
— to connect a second output (134) of the frequency divider to the control input (138) at which output an output signal (136) is set by each third pulse (118) and is reset by the respective next pulse but one.

(i) Said logic circuit for controlling the semiconductor relay (144) comprises
— a first AND-gate (146), one input of which is connected to the first output (130) of the frequency divider (120) and
— a second AND-gate (150), one input (152) of which is connected to the second output (134) of the frequency divider (120),

– an OR-gate (153) with three inputs (154, 156, 158), to the first input (154) of which the output of the first AND-gate (146) is applied and to the second input of which (156) the output of the second AND-gate (150) is applied, and

– the output of the OR-gate forms the output of the logic circuit,

(j) the first output (164) of the comparator means is connected to the other input (170) of the first AND-gate (146), the second output (166) of the comparator means is connected to the other input (172) of the second AND-gate (150) and the third output (168) of the comparator means is connected to the third input (158) of the OR-gate,

(k) three semiconductor relays (176, 178, 144) are provided, one for each phase of a three-phase current,

(l) the comparator means (160) comprise three groups of three outputs (180, 182, 184; 186, 188, 190; 164, 166, 168) each and

(m) each of these groups of outputs is connected to a logic circuit (192, 194, 196) of two AND-gates (198, 200; 202, 204; 146, 150) and an OR-gate (206, 208, 159), said logic circuit being also connected to the outputs (130, 134) of the frequency divider (120), and

(n) a respective one of the three semiconductor relays (176, 178, 144) is controllable by the logic circuits (192, 194, 196).

2. Device as set forth in claim 1, characterized in that the input signal of the comparator means (160) is formed by a continuously variable control voltage and a saw-tooth voltage superimposed to the control voltage.

3. Device as set forth in one of claims 1 or 2, characterized in that

(a) six geometrically parallel straight heating passages (16...26) are formed in a common passage block (52),

(b) a first group of three heating resistors (32, 34, 36) is arranged in three of these heating passages and a second group of three heating resistors (38, 40, 42) is arranged in the other three heating passages (22, 24, 26),

(c) the heating resistors (32...42) at the ends of the heating passages (16...26) are passed out of the passage block (52) with respective first and second heating resistor ends (54...64 and 66...76, respectively),

(d) three-pole switching means (28) are provided, which are arranged to be connected to three phases of a three-phase current and responding to water flow in the through-flow path,

(e) the first heating resistor ends (54, 56, 58) of the first group are directly connected to a first, second and third terminal (80, 82, 78), respectively, of the switching means (28),

(f) the second heating resistor ends (66, 68, 70) of the heating resistors of the first group are interconnected,

(g) a first and a second (60, 62) of the first heating resistor ends (60, 62, 64) of the heating resistors (38, 40, 42) of the second group are interconnected and connected to the third terminal (78) of the switching means (28) and the third heating resistor end (64) is connected to the second terminal (82) of the switching means (28),

(h) of the second heating resistor ends (72, 74, 76) of the heating resistors (38, 40, 42) of the second group

– a first heating resistor end is connected to the second terminal (82) through an electronic switch (46) of the first semiconductor relay (176),

– the second and the third heating resistor ends are interconnected through a respective electronic switch (48, 50) of the second and the third semiconductor relay (178, 144) and connected to the third terminal (80) of the switching means (28) and

(i) the switching means (28) have flow-dependently controlled switch contacts (84, 86) closing at a first lower water flow in the through-flow path and arranged to connect the first and the second terminal (80, 82) of the switching means (28) to one phase of the three-phase current each, and

(j) a flow-dependently controlled second switch contact (88) closing at a second higher water flow in the through-flow path and arranged to connect the third terminal (78) of the switching means (28) to the remaining phase of the three-phase current.

EP 0 189 446 B1

Fig.1

11

46
38
36
34
32
42
40
50
48

*Fig.2*

26    52    22    16

24    20    18

*Fig.3*

$$\frac{P}{P_N} = \frac{1}{3}$$

$$\frac{P}{P_N} = \frac{2}{3}$$

$$r = \frac{2}{30ms} \, i$$

$$r = 4000 \, min^{-1}$$

$$P_N = P_N$$

Fig. 7

Fig. 4

Fig.5

*Fig.6*

19